# EUROPÄISCHE PATENTSCHRIFT

(11) **EP 1 593 930 B1**
(45) Veröffentlichungstag und Bekanntmachung des Hinweises auf die Patenterteilung: **19.12.2007**
(21) Anmeldenummer: 05009161.0
(22) Anmeldetag: 26.04.2005
(51) Int. Cl.: G01B 21/04, B25J 9/16

(54) **Vorrichtung und Verfahren zur Vermessung von Bauteilen**
Apparatus and method for measuring objects
Dispositif et procédé pour mesurer des objets

(30) Priorität: 06.05.2004 DE 102004023033
(43) Veröffentlichungstag der Anmeldung: 09.11.2005
(73) Patentinhaber: CLAAS Fertigungstechnik GmbH, 48361 Beelen (DE)
(72) Erfinder: Herrmann, Günter, 33335 Gütersloh (DE); Hilbk-Kortenbruck, Frank, 48231 Warendorf (DE)
(74) Vertreter: Klesper, Hanns-Otto

(56) Entgegenhaltungen:
- EP-A- 1 512 940
- WO-A-00/65305
- WO-A-01/00370
- US-A- 6 078 846

## Beschreibung

Die Erfindung betrifft ein Verfahren zur Vermessung von Bauteilen mittels eines von einem Manipulator, vorzugsweise von einem mehrachsigen Arbeitsroboter, geführten Messsystems sowie eine entsprechende Vorrichtung zur Vermessung von Bauteilen, mit einem Manipulator und einem an dem Manipulator so angeordneten Messsystem, dass das Messsystem mittels des Manipulators im Raum bewegbar ist. Außerdem betrifft die Erfindung einen Bauteilträger zur Verwendung in einem solchen Verfahren.

Moderne Montage- und Fertigungsprozesse basieren zunehmend auf dem Einsatz von Montage- und Fertigungsrobotern, deren Aktoren zum Erreichen einer hohen räumlichen Bewegungsflexibilität des Roboters um eine Vielzahl von Schwenkachsen drehbeweglich in ihrer Lage veränderbar sind. Die immer komplexer werdenden Produktionsprozesse stellen jedoch auch hohe Anforderungen an die Präzision der Bewegung der Roboteraktoren. Dabei nimmt die Präzision der Bewegung mit zunehmender Anzahl von Schwenkachsen zum Teil erheblich ab. Zurückzuführen ist dieses Verhalten im Wesentlichen auf die Vielzahl von Roboterbauteilen und deren Bauteiltoleranzen sowie die steigende Anzahl von Schwenkachslagerungen und deren Lagerspiele. Damit derartige Robotersysteme dennoch hochpräzise Bewegungen ausführen können, müssen sie zum Teil durch sehr aufwendige Kalibrierverfahren in definierten zeitlichen Abständen nachjustiert werden.

In der Vergangenheit wurden vielfältige Anstrengungen unternommen, diese Kalibrierverfahren zu vereinfachen. Aus der EP 1 302 285 ist beispielsweise ein solches Kalibrierverfahren bekannt geworden, welches unter Verwendung komplexer mathematischer Zusammenhänge ein effizientes und dennoch einfach strukturiertes Kalibrierverfahren zum Nachjustieren von Roboterbewegungen offenbart. Aufgrund der komplexen mathematischen Zusammenhänge und des zum Teil hohen technischen Aufwands zur Umsetzung des Verfahrens sind derartige Kalibrierverfahren dennoch nicht geeignet, die Präzision der Bewegung von Montage- und Fertigungsrobotern in einem Maß zu verbessern, dass ihnen Aktoren zugeordnet werden können, die hochpräzise Bauteilvermessungen ermöglichen, insbesondere vor dem Hintergrund der sich ständig ändernden Umgebungsbedingungen in der Arbeitsumgebung der Roboter. Zur Durchführung hochpräziser Bauteilvermessungen haben sich deshalb Messverfahren etabliert, die in sogenannten Messräumen unter laborartigen Bedingungen durchgeführt werden. Neben einem hohen Zeitaufwand für die Abarbeitung derartiger Messmethoden haben sie vor allem den Nachteil, dass sie nur eingeschränkt in Montage- oder Fertigungslinien integrierbar sind. Demgegenüber wären Robotersysteme, deren Sensoren hochpräzise Messungen durchführen können, gut für die Integration in Montage- und Fertigungslinien geeignet, jedoch steht einer solchen Integration die unzureichend präzise Bewegung der Robotersegmente entgegen.

Weiter ist es aus der WO 01100370 bekannt, Montage- und Messroboter einzusetzen, deren Bewegungsbereich von einer Vielzahl von Kalibrierpositionen durchsetzt ist, sodass der Montageroboter an mehreren Stellen kalibriert werden kann. Jedoch nimmt bei derartigen Anordnungen der Montageroboter in der Kalibrierposition und der Montage- oder Messposition unterschiedliche Lagen ein, sodass lagerspielbedingte Toleranzen auftreten, die in der Regel hochpräzise Bauteilvermessungen nicht zulassen.

Die EP-A-1 512 940, veröffentlicht am 09.03.2005, beschreibt eine Vorrichtung zur Vermessung von Bauteilen mittels zumindest einem mit einem Manipulator in Wirkverbindung stehendem Messsystem. Dem Manipulator ist wenigstens eine nach dem Laser-Lichtschnittverfahren arbeitende Konturmesseinrichtung zugeordnet, welche eine optische, einen Messbereich überstreichende Sensierfläche generiert. In diesem Messbereich sind zumindest ein Messobjekt und wenigstens ein dem Messobjekt zugeordnetes Referenzmerkmal angeordnet. Auf diese Weise wird sichergestellt, dass die Ermittlung des Abstandes und / oder der Lage des Messobjektes zu dem Referenzobjekt unabhängig von der Bewegung des Manipulators erfolgt.

Es ist daher eine Aufgabe der vorliegenden Erfindung, ein Verfahren und eine Vorrichtung zur Vermessung von Bauteilen mit einem manipulatorgeführten, insbesondere robotergeführten, Messsystem anzugeben, welche die beschriebenen Nachteile des Standes der Technik vermeiden und die große Flexibilität in der Bewegung von Manipulatoren, insbesondere Robotersystemen, mit der Messgenauigkeit hochpräziser Messverfahren verbinden.

Diese Aufgabe wird durch ein Verfahren gemäß Patentanspruch 1 und durch eine Vorrichtung gemäß Patentanspruch 5 gelöst.

Erfindungsgemäß werden bei dem vorgeschlagenen Verfahren dezentral an verschiedenen Positionen nahe einem zu vermessenden Bauteil Referenzmerkmale angeordnet. Diese sind jeweils zumindest einem Messobjekt zugeordnet, welches sich in einem kurzen Abstand zu dem betreffenden Referenzmerkmal am zu vermessenden Bauteil befindet. Bei dem Messobjekt kann es sich um einen einfachen Messpunkt am Bauteil, aber auch z. B. um eine definierte Geometrie einer Kontur des Bauteils, eine Bohrung etc. im Bauteil handeln, d. h. neben Punkten können auch sich in den Raum erstreckende Linien sowie ganze Flächen des Bauteils vermessen werden. Innerhalb des erfindungsgemäßen Verfahrens wird dann vor einer Messung eines Messobjekts das Messsystem mittels des Manipulators zunächst in eine Kalibrierposition gebracht. In der Kalibrierposition wird mittels des Messsystems eine Vermessung des dem betreffenden zu messenden Messobjekts zugeordneten Referenzmerkmals durchgeführt und dabei das Koordinatensystem des Manipulators kalibriert. Anschließend wird dann das Messsystem mittels des Manipulators auf möglichst kurzem Weg in eine Messposition verfahren, an der die Messung des betreffenden Messobjekts erfolgt. Die Kalibrierposition und die Messposition können dabei prinzipiell beliebig gewählt werden, solange aus diesen Positionen heraus mittels des verwendeten Messsystems das betreffende Referenzmerkmal bzw. das jeweilige Messobjekt vermessen werden können. Eine besonders präzise Positionierung des Manipulators ergibt sich, weil das Messsystem zur Vermessung des Referenzmerkmals und zur Messung der Messobjekte des Bauteils bei feststehendem Manipulator entlang einer Messsystemachse linear verfahrbar und/oder um eine Messsystemachse verschwenkbar am Manipulator angeordnet ist und bei der Kalibrierung die Position der Messsystemsachse in einem bezüglich des Referenzmerkmals feststehenden Koordinatensystem ermittelt wird.

Durch die erfindungsgemäße dezentrale Anordnung der Referenzmerkmale und die Vorgehensweise bei der Messung wird sichergestellt, dass die absolute Distanz zwischen der Kalibrierposition, an welcher die letzte Kalibrierung des Koordinatensystems vor der Messung eines Messobjekts stattgefunden hat, und der Messposition, an welcher die eigentliche Messung des Messobjekts erfolgt, gering ist. Da die Positionierungsfehler des Manipulators aber weitgehend relative Fehler sind, deren absolute Größe von dem zurückgelegten Weg abhängt, führt dies zwangsläufig auch zu sehr niedrigen absoluten Abweichung bei der Positionierung des Messsystems mit Hilfe des Manipulators. Somit werden mit dem erfindungsgemäßen Verfahren erheblich genauere Messungen durchgeführt, so dass auch hochpräzise Messungen an großen Bauteilen möglich sind, bei denen nur kleinste Toleranzabweichungen zulässig sind.

Eine entsprechende Vorrichtung zur Vermessung von Bauteilen gemäß diesem Verfahren muss zunächst einen Manipulator und ein an den Manipulator so angeordnetes Messsystem aufweisen, dass das Messsystem mittels des Manipulators im Raum bewegbar ist. Eine besonders hohe Flexibilität in der Vermessung von komplex gestalteten Bauteilen wird dann erreicht, wenn der Manipulator als mehrachsiger Arbeitsroboter ausgeführt ist, welcher sehr flexibel verschiedenste Bauteilpositionen anfahren kann. Das Messsystem ist ist zur Vermessung des Referenzmerkmals und zur Messung der Messobjekte des Bauteils bei feststehendem Manipulator entlang einer Messsystemachse linear verfahrbar und/oder um eine Messsystemachse verschwenkbar am Manipulator angeordnet, und bei der Kalibrierung wird die Position der Messsystemsachse in einem bezüglich des Referenzmerkmals feststehenden Koordinatensystem ermittelt. Durch die linear verfahrbare oder verschwenkbare Ankopplung des Messsystems über eine zusätzliche Messsystemachse, vorzugsweise am äußeren Ende des Manipulators, kann sehr einfach dafür gesorgt werden, dass ein Messbereich durch die Sensierfläche der Konturmesseinrichtung überstrichen wird, um so eine genaue Messung des gesamten Bereichs und der darin befindlichen Objekte durchzuführen, ohne dass der Manipulator selbst bewegt werden muss. Besonders bevorzugt wird in diesem Fall bei einer Kalibrierung die exakte Position (d. h. der Raumkoordinaten und der Orientierung) der Messsystemachse in einem bezüglich des Referenzmerkmals und somit des Bauteils bzw. Bauteilträgers feststehenden Koordinatensystem ermittelt.

Weiterhin muss die Vorrichtung eine Anzahl von dezentral an verschiedenen Positionen nahe eines zu vermessenden Bauteils angeordneten Referenzmerkmalen aufweisen, welche jeweils zumindest einem Messobjekt zugeordnet sind, das sich in einem kurzen Abstand zu dem betreffenden Referenzmerkmal am zu vermessenden Bauteil befindet.

Darüber hinaus benötigt die Vorrichtung eine geeignete Steuereinrichtung, welche derart eingerichtet ist, dass das Messsystem mittels des Manipulators vor einer Messung an einem Messobjekt zunächst in eine Kalibrierposition gebracht wird, an der zur Kalibrierung des Koordinatensystems des Manipulators mit Hilfe des Messsystems eine Vermessung des entsprechenden Referenzmerkmals durchgeführt wird und dann das Messsystem erst mittels des Manipulators in eine Messposition verfahren wird, an der die Messung des betreffenden Messobjekts erfolgt.

Die abhängigen Ansprüche und die Beschreibung enthalten jeweils besonders vorteilhafte Ausgestaltungen und Weiterbildungen der Erfindung. Dabei kann insbesondere die erfindungsgemäße Vorrichtung auch analog zu den abhängigen Verfahrensansprüchen ausgebildet sein und umgekehrt.

Bei einem ganz besonders bevorzugten Ausführungsbeispiel ist zumindest einem der Referenzmerkmale eine Gruppe von Messobjekten an dem zu vermessenden Bauteil zugeordnet. Je nach benötigter Präzision kann dann beispielsweise vor der Messung der gesamten Gruppe von Messobjekten einmal das Koordinatensystem des Manipulators anhand des dieser Messobjekt-Gruppe zugeordneten Referenzmerkmals, welches im Bereich der Messobjekt-Gruppe liegt, kalibriert werden. Anschließend erfolgt dann die Vermessung der Messobjekte dieser Gruppe. Sobald die Messungen an allen Messobjekten der betreffenden Gruppe erfolgt ist, kann dann eine weitere Gruppe von Messobjekten angefahren werden, wo wiederum zunächst anhand des dort befindlichen Referenzmerkmals eine neue Kalibrierung des Manipulator-Koordinatensystems erfolgt. Bei besonders hochpräzise auszuführenden Messungen kann auch jeweils vor jeder einzelnen Vermessung eines Messobjekts aus einer Messobjekt-Gruppe das zugehörige Referenzmerkmal erneut angefahren werden, um auch zwischen der Vermessung der einzelnen Messobjekte das Koordinatensystem zu kalibrieren. Grundsätzlich können einem Messobjekt oder einer Gruppe von Messobjekten auch mehrere Referenzmerkmale zugeordnet werden und es kann z. B. durch Interpolationen die Messgenauigkeit noch weiter verbessert werden.

Vorzugsweise weist die Vorrichtung zur Vermessung von Bauteilen einen Bauteilträger auf, welcher geeignete Mittel, beispielsweise Spannpratzen oder dergl., zur Halterung des Bauteils in einer definierten Position am Bauteilträger aufweist. Die Halterungsmittel können dabei von der Art des Bauteilträgers und des zu haltenden Bauteils sowie deren Lage im Raum abhängen, beispielsweise davon, ob das Bauteil auf dem Bauteilträger aufliegt oder an diesem hängt. Es reicht prinzipiell aus, wenn dafür gesorgt wird, dass eine definierte Position auf dem Bauteilträger sicher eingehalten wird. Beispielsweise könnte das Bauteil auf einen Bauteilträger aufgelegt werden, welcher als Halterungsmittel spezielle Ausformungen oder Vorsprünge aufweist, durch die das aufgelegte Bauteil in der definierten Position zentriert wird.

Weiterhin muss dieser Bauteilträger eine Anzahl von Referenzmerkmalen aufweisen, die an definierten verschiedenen Positionen nah des positionierten Bauteils am Bauteilträger angeordnet sind. Diese Konstruktion hat den Vorteil, dass die Referenzmerkmale nicht für die Vermessung jedes einzelnen Bauteils neu positioniert werden müssen, sondern am Bauteilträger verbleiben können und zur Messung einfach das Bauteil im Bauteilträger passend positioniert wird. Grundsätzlich ist es auch möglich, in einer Prozesskette eine Mehrzahl von Bauteilträgern zu verwenden, welche gleichartig aufgebaut sind und an den gleichen Positionen identische Referenzmerkmale aufweisen.

Um einen solchen Bauteilträger universell einsetzen zu können, weist dieser vorzugsweise außer den Halterungsmitteln zur definierten Positionierung eines Bauteils am Bauteilträger eine Anzahl von an definierten verschiedenen Positionen am Bauteilträger angeordneten Referenzmerkmal-Fixierungselementen auf, an denen entsprechende Referenzmerkmale positioniert werden können. Auf diese Weise können beispielsweise verschiedenste Bauteile auf dem gleichen Bauteilträger vermessen werden, indem je nach Art und Form des Bauteils Referenzmerkmale hinzugenommen werden, d. h. zusätzlich am Bauteilträger positioniert werden oder Referenzmerkmale entfernt werden, wenn diese für das betreffende Bauteil nicht benötigt werden oder bei der Aufnahme des Bauteils am Bauteilträger stören würden. Grundsätzlich kann dieser Bauteilträger zusätzlich auch fest positionierte Referenzmerkmale aufweisen, welche nicht veränderbar sind. Bei den Referenzmerkmal-Fixierungselementen kann es sich beispielsweise um definierte Schraub- oder Klemmlöcher oder Ähnliches handeln. Wesentlich ist, dass die Referenzmerkmale eine genau definierte, exakte Position relativ zum Koordinatensystem des Bauteilträgers und somit auch zueinander aufweisen. Dabei ist je nach Art des verwendeten Referenzmerkmals auch auf die richtige Orientierung im Raum zu achten.

Als Messsystem kann grundsätzlich ein beliebiges Messsystem verwendet werden, welches in der Lage ist, hochpräzise Messungen durchzuführen. Besonders bevorzugt wird aber ein berührungslos arbeitendes Messsystem verwendet.

Als berührungsloses Messsystem kann beispielsweise ein 3D-Bilderfassungssystem wie ein Kamerasystem oder dergleichen genutzt werden. Dabei kann durch die Auswertung der Bilder die Position des Messsystems im Raum relativ zum vermessenen Referenzmerkmal bzw. Messobjekt oder umgekehrt die Position des Messobjekts bzw. des Referenzmerkmals bezogen auf das Koordinatensystem des Messsystems bzw. Manipulators bestimmt werden. Der Begriff, "Position" umfasst im Übrigen im Sinne dieser Schrift - soweit nicht explizit anders erwähnt - nicht nur den Standort, sondern auch die Orientierung des Messsystems bzw. eines Bauteils, Messobjekts, Referenzmerkmals oder eines sonstigen Objekts im Raum.

Ein konstruktiv einfach umsetzbares, hochpräzises Messsystem ist z. B. eine Konturmesseinrichtung, welche eine Signalquelle zur Generierung einer optischen Sensierfläche und eine einen Schnittbereich der Sensierfläche mit einem Messbereich wiedergebende Registriereinheit umfasst. Als Signalquelle kann hierbei vorzugsweise ein Laser genutzt werden. Mit einem solchen Messsystem kann eine Vermessung des Referenzmerkmals und eine Messung der Messobjekte des Bauteils mit Hilfe eines Laserlichtschnittverfahrens durchgeführt werden. Derartige Laserlichtschnittverfahren werden bereits für vielfache Messeinsätze genutzt.

Die Referenzmerkmale verkörpern bezüglich des Bauteilträgers bzw. Bauteils ortsfeste geometrische Referenzpunkte, deren Positionen im Raum in dem Messsystem vorzugsweise in einer entsprechenden Verrechnungseinheit hinterlegt sind. Da jeweils die Abstände der gemessenen Messobjekte zum zugehörigen Referenzmerkmal durch einfache strukturierte Datenverarbeitungssysteme genau ermittelt werden können und die Abstände der einzelnen Referenzmerkmale am Bauteilträger ebenfalls exakt bekannt sind, können so auch auf größeren Abständen mit nur relativ geringem Fehler die Distanzen zwischen unterschiedlichen Messobjekten am Bauteil bestimmt werden. Der dabei in Kauf zu nehmende Fehler liegt dann im Wesentlichen nur in der Größenordnung des relativen Fehlers der Manipulatorposition bezogen auf die kurzen Distanzen zwischen den Messobjekten und den zugehörigen Referenzmerkmalen bzw. zwischen den betreffenden Kalibrier- und Messpositionen. Der auf diese Weise erzeugte absolute Fehler ist wiederum relativ zu der Gesamtdistanz zwischen den Messobjekten äußerst klein. Es kann folglich die Geometrie auch von größeren Bauteilen durch Messung der Positionen von einzelnen, weit voneinander entfernten Messobjekten am Bauteil soweit in einem räumlichen Koordinatensystem abgebildet werden, dass diese Messdaten auch zur qualitativen Beurteilung der Geometrie nicht nur der einzelnen Messobjekte, sondern auch des gesamten Bauteils herangezogen werden können. Es können folglich Form- und Lageabweichungen der einzelnen Messobjekte am Bauteil, aber auch Formabweichungen des gesamten Bauteils bestimmt werden. Um auf einfache Weise eine komplette Kalibrierung des Manipulator-Koordinatensystems durchzuführen und insbesondere die exakte Position der Messsystemachse in all ihren Freiheitsgraden in einer Messung zu bestimmen, bietet es sich an, als Referenzmerkmale geometrische Körper, bevorzugt pyramidenförmige geometrische Körper zu verwenden. Bei einem Überstreichen der Referenzmerkmale mittels der optischen Sensierfläche einer Konturmesseinrichtung kann anhand der Lage der Kanten eines solchen geometrischen Körpers sehr einfach die genaue Position des die Sensierfläche abstrahlenden Messsystems ermittelt werden.

Die Erfindung wird im Folgenden unter Hinweis auf die beigefügten Zeichnungen anhand von Ausführungsbeispielen näher erläutert. Dabei werden gleiche Bauteile mit identischen Bezugszeichen versehen. Es zeigen:
Figur 1 eine perspektivische Ansicht eines Manipulators mit einem Messsystem bei der Vermessung eines Referenzmerkmals,
Figur 2 eine perspektivische Darstellung einer weiteren Ausführung eines Manipulators mit einem Messsystem bei der Vermessung eines Messobjekts,
Figur 3 eine Darstellung der Vermessung eines Bauteils mit einer komplexen geometrischen Struktur,
Figur 4 eine Draufsicht auf einen Bauteilträger mit einer Mehrzahl von Referenzmerkmalen und mit einem Bauteil mit mehreren Ausschnitten.

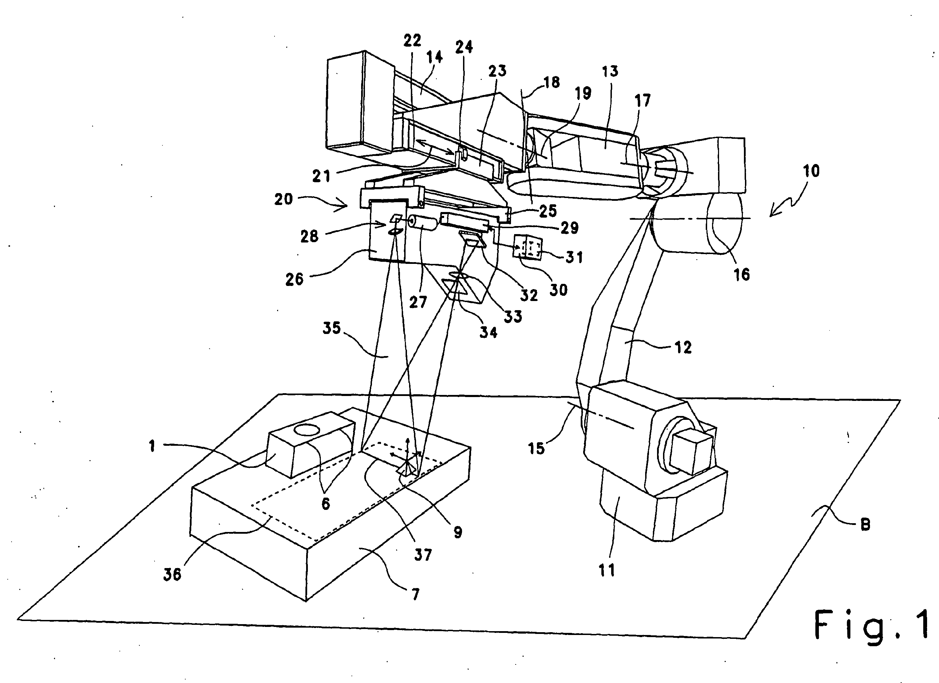

In Figur 1 ist ein als Montage- und Fertigungsroboter 10, nachfolgend kurz Arbeitsroboter 10 genannter, ausgeführter Manipulator 10 dargestellt. Dieser Arbeitsroboter 10 ist untenseitig über einen Sockel 11 ortsfest im Boden B verankert. Der Arbeitsroboter 10 weist in an sich bekannter Weise mehrere Segmente 12 bis 14 auf, die insgesamt den Werkzeugträger bilden. Die einzelnen Segmente 12 bis 14 sind um eine Vielzahl horizontaler und vertikaler Schwenkachsen 15 bis 19 bewegbar.

Im dargestellten Ausführungsbeispiel nimmt das äußere Segment 14 des Arbeitsroboters 10 eine Haltevorrichtung auf, welche nach Art eines Linearführungssystems mit einer Führungsschiene 22 und einem Führungsschlitten 23 ausgebildet ist. Die Führungsschiene 22 ist dabei am äußeren Segment 14 des Arbeitsroboters 10 befestigt. Am Führungsschlitten 23 ist wiederum ein Adapterstück 25 befestigt, welches das Messsystem 20 hält. Das Messsystem 20 ist somit bei feststehendem Arbeitsroboter 10 entlang einer linearen Messsystemachse 21 verfahrbar.

Das Messsystem 20 weist eine Konturmesseinrichtung 26 auf, hier einen Laserlichtschnittsensor, welcher drehfest am Adapterstück 25 befestigt ist. Diese Konturmesseinrichtung 26 umfasst in an sich bekannter Weise eine Laserstrahlquelle 27, deren Laserstrahl über ein Spiegel-Linsensystem 28 umgelenkt und aufgespalten wird, so dass hiervon eine Sensierfläche 35 aufgespannt wird. Ein Messverfahren mit einer solchen aus einem Laserstrahl gebildeten Sensierfläche 35 wird auch Laserlichtschnittverfahren und die die Sensierfläche 35 generierende Messeinrichtung daher auch Laserlichtschnittsensor genannt. Prinzipiell können zum Aufbau eines solchen Sensors aber auch andere optische Verfahren genutzt werden, die entweder ein flächiges oder ein punktförmiges Sensierfeld generieren.

Die Konturmesseinrichtung 26 weist in ihrem von dem Spiegel-Linsensystem 28 wegweisenden Bereich ein von einem Sichtfenster 34 geschütztes Objektiv 33 auf. Dieses erfasst den Schnittbereich 37 zwischen der Sensierfläche 35 und einem Messbereich 36 und leitet diesen an einen Detektor 32, auch Registriereinheit 32 genannt, weiter. Dieser Detektor 32 bildet den Schnittbereich 37 ab. Über eine elektronische Signaleinheit 29 können die Detektorsignale dann als Ausgangssignale zur weiteren Verarbeitung verfügbar gemacht werden. Die Signaleinheit 29 steuert hier auch den Laser 27 und das Spiegel-Linsensystem 28 an.

Die Ausgangssignale gehen an eine Steuerungseinrichtung 30, in welcher sich auch eine Verrechnungseinheit 31 befindet, in der verschiedene Koordinatensysteme sowie die Positionen einzelner Objekte innerhalb dieser Koordinatensysteme hinterlegt sind bzw. berechenbar sind.

Um eine Messung durchzuführen, wird das Messsystem 20 bei feststehendem Arbeitsroboter 20 entlang der Messsystemachse 21 linear verfahren, wobei die Sensierfläche 35 bzw. der Schnittbereich 37 einen Messbereich 36 auf einem Bauteilträger 7 bzw. einem Bauteil 1 überstreicht. Die Größe des Messbereichs 36 hängt vom Grad der Auffächerung des Laserstrahls in dem Spiegel-Linsensystem 28 und dem Verfahrweg des Führungsschlittens 23 an der Führungsschiene 22 ab.

In Figur 1 ist schematisch dargestellt, wie ein Bauteil 1 auf einem Bauteilträger 7 positioniert ist. Sowohl der Bauteilträger 7 als auch das Bauteil 1 sind in Figur 1 sehr klein dargestellt. In der Realität handelt es sich in der Regel um erheblich größere Bauteile, auch wenn die Erfindung grundsätzlich auch bei kleineren Bauteilen genutzt werden kann. Das Bauteil kann im einfachsten Fall am Bauteilträger 7 eingeschraubt bzw. durch Klemmung oder dergleichen gehalten sein. Es kann grundsätzlich aber auch nur in eine Vertiefung oder Ähnliches, welche die genaue Positionierung des Bauteils 1 im Bauteilträger 7 sicherstellt, aufgelegt sein. Je nach Halterung kann der Bauteilträger 7 auch beispielsweise seitlich hängend oder sogar über Kopf an dem Arbeitsroboter 10 mit dem Messsystem 20 vorbeigeführt werden.

An diesem Bauteil 1 in Figur 1 sind verschiedenste Messobjekte 6, beispielsweise Kanten des Bauteils oder Bohrungen, zu vermessen. In einem kurzen Abstand neben dem Bauteil 1 befindet sich am Bauteilträger 7 ein Referenzmerkmal 9. Hierbei handelt es sich um einen pyramidenförmigen Körper, dessen Position (einschließlich der Orientierung der Pyramidenachsen) auf dem Bauteilträger 7 genau bekannt ist. Die entsprechenden Koordinaten sind in der Verrechnungseinheit 31 hinterlegt. Dieses Referenzmerkmal 9 ist den in der Nähe befindlichen Messobjekten 6 am Bauteil 1 zugeordnet. Es dient zur Kalibrierung des Koordinatensystems des Arbeitsroboters 10, bevor dieser die zugehörigen Messobjekte 6 zur Vermessung anfährt.

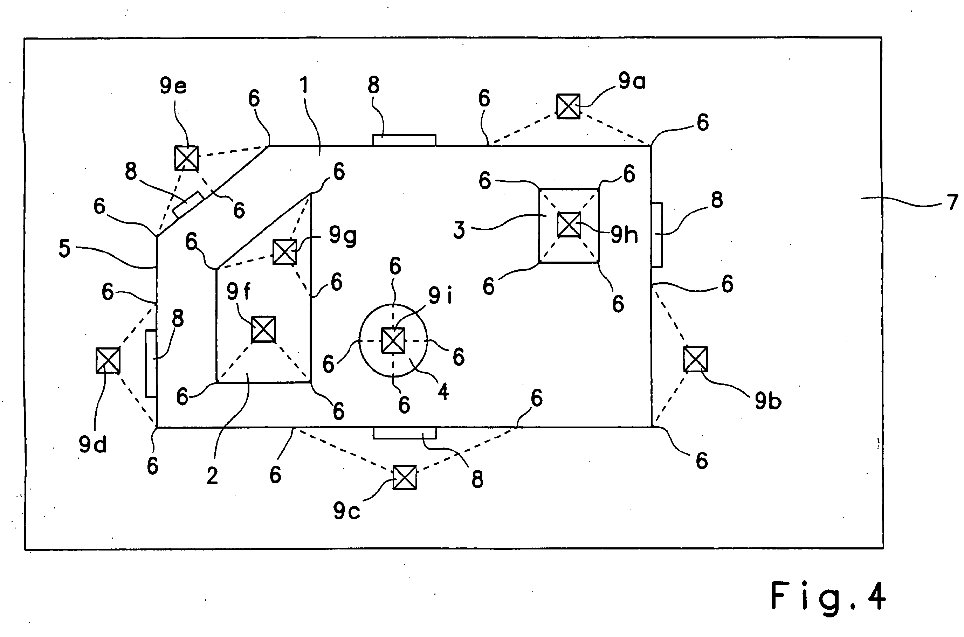

Figur 4 zeigt eine Draufsicht auf ein großflächigeres Bauteil 1, beispielsweise ein Karosserieteil, welches sich auf einem entsprechend großen Bauteilträger 7 befindet. Die Abmessungen dieses Bauteils 1 sollen mit sehr geringen Toleranzen vermessen werden. Um das Bauteil 1 exakt zu vermessen, muss das Messsystem 20 mit Hilfe des Arbeitsroboters 10 an eine Vielzahl von Messobjekten 6 gefahren werden, welche zu vermessen sind. Bei den in Figur 4 dargestellten Messobjekten 6 handelt es sich um einzelne Messpunkte an geometrischen Strukturen, beispielsweise an Kanten oder Ecken der äußeren Kontur 5 des Bauteils 1 sowie an den Konturen von Ausschnitten 2, 3, Löchern 4 oder Bohrungen des Bauteils 1, deren Positionen möglichst exakt zu bestimmen sind.

Das Bauteil 1 ist hier mit Hilfe von Halterungen 8 an einer genau definierten Stelle auf dem Bauteilträger 7 fixiert. Außerdem befinden sich auf dem Bauteilträger 7 erfindungsgemäß an einer Vielzahl von Positionen Referenzmerkmale 9a,..., 9i. Jedem dieser Referenzmerkmale 9a,..., 9i ist jeweils eine Gruppe von Messobjekten 6 zugeordnet, welche sich in möglichst kurzem Abstand zu dem jeweiligen Referenzmerkmal, wobei es sich hier wieder um Pyramidenkörper handelt, befinden. Die Zugehörigkeit der einzelnen Messobjekte 6 zu den jeweiligen Referenzmerkmalen 9a,..., 9i ist in Figur 4 durch die gestrichelten Linien markiert.

Die Vermessung einer Gruppe von Messobjekten 6 am Bauteil 1 erfolgt erfindungsgemäß so, dass zunächst das zugehörige Referenzmerkmal 9a,..., 9i angefahren und vermessen wird. Das heißt, mit Hilfe des Arbeitsroboters 10 wird das Messsystem 20 zunächst in eine Kalibrierposition gefahren, wie dies in Figur 1 schematisch dargestellt ist. Dann wird das Messsystem 20 bei feststehendem Arbeitsroboter 10 entlang der Messsystemachse 21 so verfahren, dass die Sensierfläche 35 einen Messbereich 36 überstreicht, in welchem sich das Referenzmerkmal 9, 9a,..., 9i befindet. Mit Hilfe der in der Verrechnungseinheit 31 hinterlegten genauen Koordinaten des betreffenden Referenzmerkmals 9, 9a,..., 9i kann dann das interne Koordinatensystem des Arbeitsroboters 10 kalibriert werden. Dabei kann insbesondere auch die Lage der Messsystemachse 21 im Raum exakt bestimmt werden. Beispielsweise kann das Koordinatensystem des Arbeitsroboters 10 in der Kalibrierposition auf Null gesetzt werden, wobei die Messsystemachse 21 entlang einer bestimmten Koordinatensystemachse verläuft.

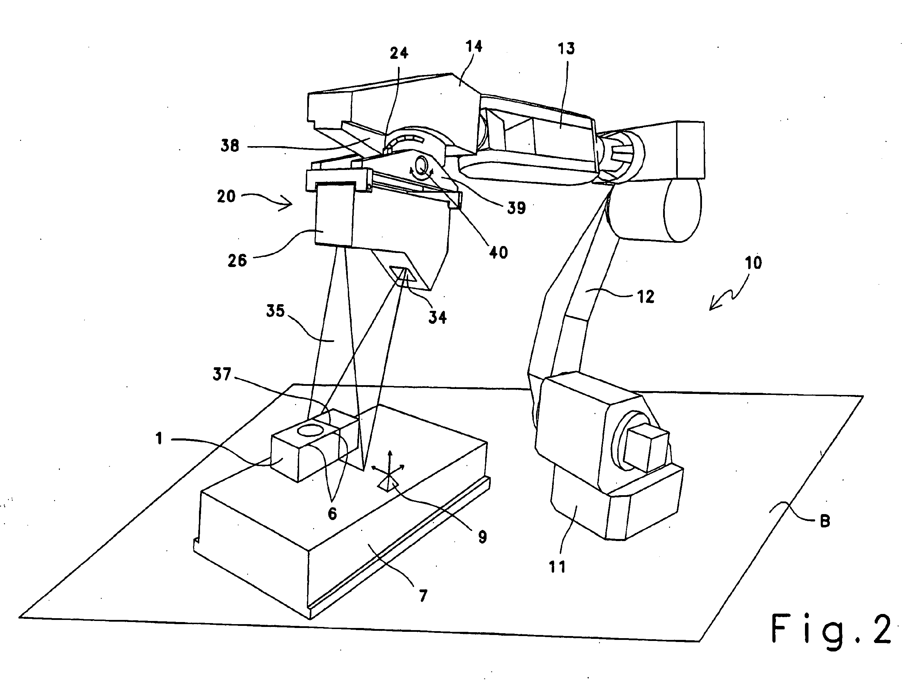

Nachdem so die exakten Koordinaten des Arbeitsroboters 10 bestimmt wurden, kann dieser dann in Richtung des Bauteils 1 in eine Messposition, beispielsweise unmittelbar oberhalb des Messobjekts 6, verfahren werden. In dieser Position erfolgt wieder ein Verfahren des Messsystems 20 entlang der Messsystemachse 21, so dass das Messobjekt 6, beispielsweise ein bestimmter Punkt auf der Kontur des Bauteils 1, überstrichen wird. Dies ist in Figur 2 dargestellt.

Figur 2 zeigt außerdem auch eine zweite Variante der Ankopplung des Messsystems 20 an das äußere Segment 14 des Arbeitsroboters 10. Hierbei ist die Konturmesseinrichtung 26 an einem Adapterstück 39 befestigt, das um eine Messsystemachse 40 schwenkbar an einer Schwenkhalterung 38 angelenkt ist, welche wiederum starr an dem äußeren Segment 14 des Arbeitsroboters 10 befestigt ist. Auch hier wird durch entsprechende Messaufnehmer die genaue Winkelstellung des Messsystems 20 zum äußeren Segment 14 des Arbeitsroboters 10 festgestellt, wobei ein Drehwinkelaufnehmer verwendet wird, welcher für genaueste Messungen geeignet ist.

Damit hochpräzise Positionskoordinaten der Messobjekte 6 und der Referenzmerkmale 9, 9a,..., 9i generiert werden können, ist es erforderlich, dass die Lageänderung der Sensierfläche 35 sensorisch erfasst und an die Steuereinrichtung 30 bzw. die Verrechnungseinheit 31 übermittelt wird. In an sich bekannter und deshalb nicht näher dargestellter Weise kann diese Lageänderung mittels eines Wegmesssystems 24 bestimmt werden. Je nachdem, ob die Position der Konturmesseinrichtung mittels eines Linearführungssystems oder mit Hilfe einer Schwenkachse erfolgt, sind beispielsweise an der Führungsschiene 22 und/oder dem Führungsschlitten 23 bzw. an zumindest einem der schwenkbeweglich untereinander verbundenen Teile 38, 39 linear oder kreisförmig ausgebildete Maßstäbe angeordnet, deren Markierungen durch an den jeweils zugehörigen Gegenstücken angeordnete Lagesensoren abgegriffen werden. Dabei sind die Maßstäbe in der Regel aus Glas, wobei die Markierungen in der Regel eingraviert oder eingefräst sind. Mit einem solchen Wegmesssystem 24 wird z. B. die exakte Position des Führungsschlittens 23 zur Führungsschiene 22 oder die genaue Winkelstellung des Messsystems 20 zum äußeren Segment 14 des Arbeitsroboters 10 ermittelt und dieser Wert an die Steuereinrichtung 30 übergeben. In den Figuren 1 und 2 ist ein solches Wegmesssystem 24 jeweils nur grob schematisch dargestellt.

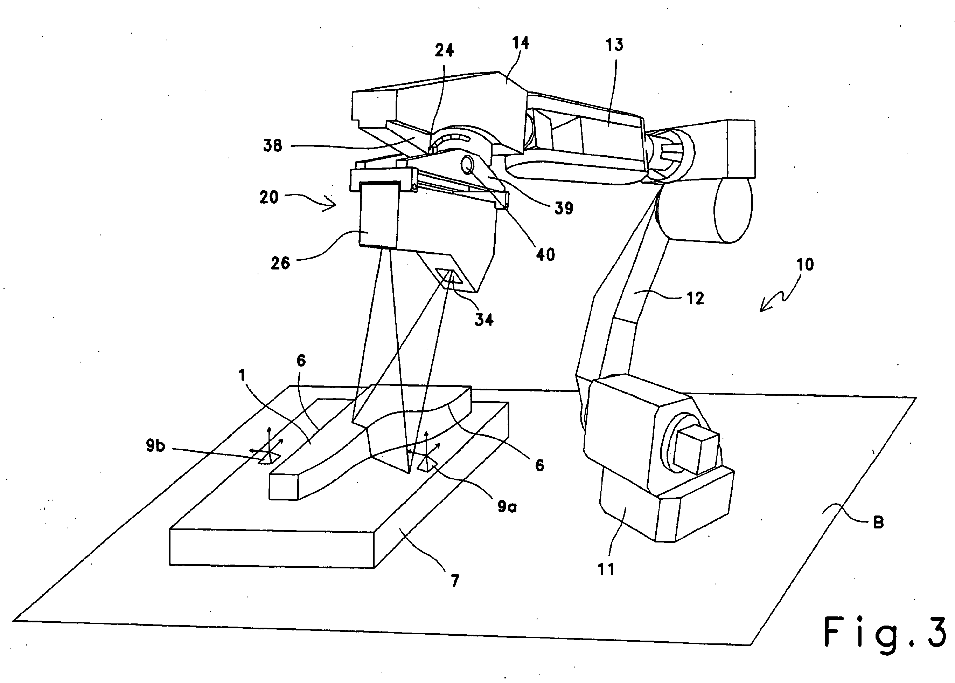

Figur 3 zeigt den Arbeitsroboter mit dem Messsystem 20 gemäß Figur 2 beim Vermessen einer komplexeren Kontur eines Bauteils 1 auf dem Bauteilträger 7. Bei diesem Ausführungsbeispiel ist ein erstes Messobjekt 6 die geschwungene Kontur an der in der Figur vorne liegenden Seite des Bauteils 1. Zur Messung dieser Kontur erfolgt zuvor eine Kalibrierung an dem unmittelbar vor der Kontur liegenden Referenzmerkmal 9a. Anschließend soll die hintere gerade Kante des Bauteils 1 vermessen werden. Hierfür fährt der Arbeitsroboter 10 zunächst über das hinter der Hinterkante liegende Referenzmerkmal 9b. Durch eine Messung des Referenzmerkmals 9b mittels des Messsystems 20 erfolgt dann eine erneute Kalibrierung des Roboterkoordinatensystems in der neuen Position. Anschließend wird erst die hintere Kante des Bauteils 1 angefahren und vermessen.

Mit dem erfindungsgemäßen Verfahren bzw. der erfindungsgemäßen Vorrichtung sind auch bei größeren Bauteilen auf einfache Weise hochpräzise Messungen möglich. Dies wird insbesondere bei der Draufsicht auf das Bauteil 1 in Figur 4 deutlich. In der Regel sind bei der Vermessung eines größeren Bauteils 1 u. a. die Außenmaße zu bestimmen. Das heißt, es muss beispielsweise möglichst exakt die Distanz zwischen der oberen rechten Ecke und der linken unteren Ecke bestimmt werden. Dies ist nur möglich, wenn der Arbeitsroboter 10 zunächst die obere rechte Ecke anfährt und deren Position vermisst und anschließend die linke untere Ecke anfährt und dort eine Positionsmessung vornimmt. Da jedoch die Höhe des Fehlers in der Positionsbestimmung relativ zu der vom Arbeitsroboter 10 zurückgelegten Wegstrecke ist, würde bei der Bestimmung dieser Bauteil-Diagonalen ein sehr großer Fehler auftreten. Mit dem erfindungsgemäßen Verfahren wird dieser Fehler erheblich reduziert, da vor jeder der beiden Einzelmessungen jeweils das Koordinatensystem des Arbeitsroboters 10 durch ein Vermessen der den jeweiligen Eckpunkten zugeordneten Referenzmerkmale 9a, 9d kalibriert wird. Der absolute Fehler, der bei der Positionierung des Messsystems 20 durch den Arbeitsroboter 10 bei Vermessung der beiden Eckpunkte auftritt, entspricht dann im Wesentlichen nur noch dem relativen Fehler bezogen auf die Distanzen der beiden zu vermessenden Eckpunkte zu den jeweils zugehörigen Referenzmerkmalen 9a, 9d. Der absolute Fehler wird daher durch diese Methode erheblich reduziert, so dass auch sehr große Bauteile mit ausreichend großer Präzision mittels robotergeführter Messsysteme vermessen werden können. Insbesondere ermöglicht das erfindungsgemäße Verfahren die Überprüfung von Form- und Lagetoleranzen von verschiedenen Messobjekten zueinander wie etwa ein Fluchten von Bohrungen über große Distanzen.

Es wird abschließend noch einmal darauf hingewiesen, dass es sich bei den in den Figuren dargestellten Vorrichtungen und Bauteilen nur um Ausführungsbeispiele handelt, die in vielfacher Weise verändert werden können, ohne den Rahmen der Erfindung zu verlassen. So könnte beispielsweise, anstatt das Messsystem 20 am äußeren Segment 14 zur Messung zu verfahren oder zu verschwenken, auch der Sockel 11 des gesamten Arbeitsroboters 10 innerhalb einer ausreichend präzise aufgebauten Linearführung verfahren werden. Ebenso können beispielsweise, sofern der von der Sensierfläche 35 erreichbare Messbereich 36 groß genug ist, auch mehrere Messobjekte am Bauteil innerhalb eines Messgangs während einer Verschiebung oder Verschwenkung des Messsystems entlang der Messsystemachse erfolgen. Ebenso könnte, sofern in einem konkreten Fall ein bestimmtes Messobjekt 6 sehr nah an dem zugehörigen Referenzmerkmal 9, 9a,..., 9i liegt, auch dieses Referenzmerkmal 9, 9a,..., 9i gemeinsam mit dem zu messenden Messobjekt 6 in einem Messgang gemessen werden.

### Bezugszeichenliste

- 1: Bauteil
- 2: Ausschnitt
- 3: Ausschnitt
- 4: Loch
- 5: Kontur
- 6: Messobjekt
- 7: Bauteilträger
- 8: Halterungsmittel
- 9: Referenzmerkmal
- 9a - 9i: Referenzmerkmal
- 10: Manipulator
- 11: Sockel
- 12-14: Segmente
- 15-19: Schwenkachsen
- 20: Messsystem
- 21: Messsystemachse
- 22: Führungsschiene
- 23: Führungsschlitten
- 24: Wegmesssystem
- 25: Adapterstück
- 26: Konturmesseinrichtung
- 27: Laserstrahlquelle
- 28: Spiegel-Linsensystem
- 29: Signaleinheit
- 30: Steuereinrichtung
- 31: Verrechnungseinheit
- 32: Registriereinheit
- 33: Objektiv
- 34: Sichtfenster
- 35: Sensierfläche
- 36: Messbereich
- 37: Schnittbereich
- 38: Schwenkhalterung
- 39: Adapterstück
- 40: Messsystemachse
- B: Boden

## Patentansprüche

1. Verfahren zur Vermessung von Bauteilen (1) mittels eines von einem Manipulator (10) geführten Messsystems (20),
- wobei dezentral an verschiedenen Positionen nahe eines zu vermessenden Bauteils (1) Referenzmerkmale (9, 9a,..., 9i) angeordnet werden, welche jeweils zumindest einem Messobjekt (6) zugeordnet werden, das sich in einem kurzen Abstand zu dem betreffenden Referenzmerkmal (9, 9a,..., 9i) am zu vermessenden Bauteil befindet,
- und wobei vor einer Messung eines Messobjekts (6) das Messsystem (20) mittels des Manipulators (10) zunächst in eine Kalibrierposition gebracht wird, an der zur Kalibrierung eines Koordinatensystems des Manipulators (10) mittels des Messsystems (20) eine Vermessung des dem betreffenden Messobjekt (6) zugeordneten Referenzmerkmals (9, 9a,..., 9i) durchgeführt wird,
und dann das Messsystem (20) mittels des Manipulators (10) in eine Messposition verfahren wird, an der die Messung des betreffenden Messobjekts (6) erfolgt und wobei das Messsystem (20) zur Vermessung des Referenzmerkmals (9, 9a,..., 9i) und zur Messung der Messobjekte (6) des Bauteils (1) bei feststehendem Manipulator (10) entlang einer Messsystemachse (21) linear verfahrbar und/oder um eine Messsystemachse (40) verschwenkbar am Manipulator (10) angeordnet ist und bei der Kalibrierung die Position der Messsystemsachse (21, 40) in einem bezüglich des Referenzmerkmals (9, 9a,..., 9i) feststehenden Koordinatensystem ermittelt wird.

2. Verfahren nach Anspruch bei dem zumindest einem der Referenzmerkmale (9, 9a,..., 9i) eine Gruppe von Messobjekten (6) an dem zu vermessenden Bauteil (1) zugeordnet wird.

3. Verfahren nach Anspruch 1 oder 2, wobei die Vermessung des Referenzmerkmals (9, 9a, ..., 9i) und die Messung der Messobjekte (6) des Bauteils (1) mittels des Messsystems (20) berührungslos erfolgt.

4. Verfahren nach Anspruch 3, bei dem zur Vermessung des Referenzmerkmals (9, 9a,..., 9i) und zur Messung der Messobjekte (6) des Bauteils (1) ein Laserlichtschnittverfahren verwendet wird.

5. Vorrichtung zur Vermessung von Bauteilen (1) mit
- einem Manipulator (10),
- einem an dem Manipulator (10) so angeordneten Messsystem (20), dass das Messsystem (20) mittels des Manipulators (10) im Raum bewegbar ist,
- einer Anzahl von dezentral an verschiedenen Positionen nahe eines zu vermessenden Bauteils (1) angeordneten Referenzmerkmalen (9, 9a,..., 9i), welche jeweils zumindest einem Messobjekt (6) zugeordnet sind, das sich in einem kurzen Abstand zu dem betreffenden Referenzmerkmal (9, 9a,..., 9i) am zu vermessenden Bauteil (1) befindet,
- und einer Steuereinrichtung (30), welche derart eingerichtet ist, dass das Messsystem (20) mittels des Manipulators (10) vor einer Messung an einem Messobjekt (6) zunächst in eine Kalibrierposition gebracht wird, an der zur Kalibrierung eines Koordinatensystems des Manipulators (10) mittels des Messsystems (20) eine Vermessung des dem betreffenden Messobjekt (6) zugeordneten Referenzmerkmals (9, 9a,..., 9i) durchgeführt wird,
und dann das Messsystem (20) mittels des Manipulators (10) in eine Messposition verfahren wird, an der die Messung des betreffenden Messobjekts (6) erfolgt und wobei das Messsystem (20) zur Vermessung des Referenzmerkmals (9, 9a,..., 9i) und zur Messung der Messobjekte (6) des Bauteils (1) bei feststehendem Manipulator (10) entlang einer Messsystemachse (21) linear verfahrbar und/oder um eine Messsystemachse (40) verschwenkbar am Manipulator (10) angeordnet ist und bei der Kalibrierung die Position der Messsystemsachse (21, 40) in einem bezüglich des Referenzmerkmals (9, 9a, ..., 9i) feststehenden Koordinatensystem ermittelt wird.

6. Vorrichtung nach Anspruch 5 mit einem Bauteilträger (7) mit Mitteln (8) zur Halterung des Bauteils (1) in einer definierten Position am Bauteilträger (7) und mit einer Anzahl von Referenzmerkmalen (9,9a,...,9i), welche am Bauteilträger (7) an definierten verschiedenen Positionen nahe einem positionierten Bauteil (1) angeordnet sind.

7. Vorrichtung nach Anspruch 5 oder 6, wobei das Messsystem (20) ein berührungslos arbeitendes Messsystem (20) umfasst.

8. Vorrichtung nach einem der Ansprüche 5 bis 7, wobei die Referenzmerkmale (9, 9a,..., 9i) ortsfeste geometrische Referenzpunkte verkörpern, die in einer Verrechnungseinheit (31) in ihrer Lage im Raum hinterlegt sind.

9. Vorrichtung nach einem der Ansprüche 5 bis 8, wobei die Referenzmerkmale (9, 9a,..., 9i) jeweils einen geometrischen Körper (9, 9a,..., 9i) umfassen.

10. Vorrichtung nach einem der Ansprüche 5 bis 9, wobei das Messsystem (20) eine Konturmesseinrichtung (26) mit einer Signalquelle (27, 28, 29) zur Generierung einer optischen Sensierfläche (35) und eine einen Schnittbereich (37) der Sensierfläche (35) mit einem Messbereich (36) wiedergebende Registriereinheit (32) umfasst.

11. Vorrichtung nach Anspruch 10, bei der die Signalquelle (27, 28, 29) eine Laserstrahlquelle (27) umfasst.

## Claims

1. A method of measuring components (1) by means of a measuring system (20) which is guided by a manipulator (10),
- wherein reference features (9, 9a, ...., 9i) are arranged decentrally at various positions close to a component (1) to be measured, which reference features are each associated with at least one respective measurement object (6) disposed at a short distance relative to the reference feature (9, 9a, ..., 9i) in question on the component to be measured,
- and wherein prior to a measurement of a measurement object (6) the measuring system (20) is firstly moved by means of the manipulator (10) into a calibration position at which measurement of the reference feature (9, 9a, ..., 9i) associated with the measurement object (6) in question is effected for calibration of a co-ordinate system of the manipulator (10) by means of the measuring system (20),
and then the measuring system (20) is moved by means of the manipulator (10) into a measuring position at which measurement of the measurement object (6) in question is effected, and wherein the measuring system (20) for measurement of the reference feature (9, 9a, ..., 9i) and for measurement of the measurement objects (6) of the component (1) with the manipulator (10) stationary is arranged on the manipulator (10) displaceably linearly along a measuring system axis (21) and/or pivotably about a measuring system axis (40) and in the calibration operation the position of the measuring system axis (21, 40) is ascertained in a co-ordinate system which is stationary with respect to the reference feature (9, 9a, ..., 9i).

2. A method according to claim 1 wherein a group of measurement objects (6) on the component (1) to be measured is associated with at least one of the reference features (9, 9a, ..., 9i).

3. A method according to claim 1 or claim 2 wherein measurement of the reference feature (9, 9a, ..., 9i) and measurement of the measurement objects (6) of the component (1) is effected by means of the measuring system (20) in contact-less mode.

4. A method according to claim 3 wherein a laser light section method is used for measuring the reference feature (9, 9a, ..., 9i) and for measuring the measurement objects (6) of the component (1).

5. Apparatus for measuring components (1) comprising
- a manipulator (10),
- a measuring system (20) so arranged on the manipulator (10) that the measuring system (20) is movable in space by means of the manipulator (10),
- a number of reference feature (9, 9a, ..., 9i) which are arranged decentrally at various positions near a component (1) to be measured and which are each associated with at least one respective measurement object (6) disposed at a short distance relative to the reference feature (9, 9a, ..., 9i) in question on the component (1) to be measured, and
- a control device (30) which is so adapted that prior to a measurement operation on a measurement object (6) the measuring system (20) is firstly moved by means of the manipulator (10) into a calibration position at which measurement of the reference feature (9, 9a, ..., 9i) associated with the measurement object (6) in question is effected for calibration of a co-ordinate system of the manipulator (10) by means of the measuring system (20),
and then the measuring system (20) is moved by means of the manipulator (10) into a measuring position at which measurement of the measurement object (6) in question is effected, and wherein the measuring system (20) for measurement of the reference feature (9, 9a, ..., 9i) and for measurement of the measurement objects (6) of the component (1) with the manipulator (10) stationary is arranged on the manipulator (10) displaceably linearly along a measuring system axis (21) and/or pivotably about a measuring system axis (40) and in the calibration operation the position of the measuring system axis (21, 40) is ascertained in a co-ordinate system which is stationary with respect to the reference feature (9, 9a, ..., 9i).

6. Apparatus according to claim 5 comprising a component carrier (7) having means (8) for holding the component (1) in a defined position on the component carrier (7) and a number of reference feature (9, 9a, ..., 9i) arranged on the component carrier (7) at defined various positions near a positioned component (1).

7. Apparatus according to claim 5 or claim 6 wherein the measuring system (20) includes a contact-lessly operating measuring system (20).

8. Apparatus according to one of claims 5 to 7 wherein the reference features (9, 9a, ..., 9i) embody stationary geometrical reference points which are stored in their position in space in a computing unit (31).

9. Apparatus according to one of claims 5 to 8 wherein the reference features (9, 9a, ..., 9i) each include a geometrical body (9, 9a, ..., 9i).

10. Apparatus according to one of claims 5 to 9 wherein the measuring system (20) includes a contour measuring device (26) having a signal source (27, 28, 29) for generating an optical sensing surface (35) and a registration unit (32) reproducing a section region (37) of the sensing surface (35) with a measurement region (36).

11. Apparatus according to claim 10 wherein the signal source (27, 28, 29) includes a laser beam source (27).

## Revendications

1. Procédé pour mesurer des pièces (1) à l'aide d'un dispositif de mesure (20) déplacé par un manipulateur (10), selon lequel
• on dispose des repères de référence (9, 9a,..., 9i) excentrés en différents points dans le voisinage de la pièce (1),' repères qui sont associés chacun à au moins un objet de mesure (6) situé à une faible distance du repère de référence (9, 9a,..., 9i) concerné,
• et, avant une mesure d'un objet de mesure (6), on amène d'abord le dispositif de mesure (20) à l'aide du manipulateur (10) dans une position d'étalonnage, dans laquelle une mesure du repère de référence (9, 9a,..., 9i) associé à l'objet de mesure (6) concerné est réalisée à l'aide du dispositif de mesure (20) à des fins d'étalonnage du système de coordonnées du manipulateur (10),
• puis on amène le dispositif de mesure (20) à l'aide du manipulateur (10) dans une position dans laquelle la mesure de l'objet de mesure (6) concerné a lieu, le dispositif de mesure (20) pour la mesure du repère de référence (9, 9a,..., 9i) et la mesure de l'objet de mesure (6) de la pièce (1), le manipulateur (10) étant stationnaire, étant monté avec possibilité de déplacement linéaire le long d'un axe (21) du dispositif de mesure et/ou de pivotement autour d'un axe (40) du dispositif de mesure, et la position de l'axe (21, 40) du dispositif de mesure, pour l'étalonnage, étant déterminée dans un système de coordonnées fixe par rapport au repère de référence (9, 9a,..., 9i).

2. Procédé selon la revendication 1, selon lequel on associe à au moins un des repères de référence (9, 9a,..., 9i) un groupe d'objets de mesure (6) sur la pièce à mesurer (1).

3. Procédé selon la revendication 1 ou 2, selon lequel la mesure du repère de référence (9, 9a,..., 9i) et la mesure de l'objet de mesure (6) de la pièce (1) à l'aide du dispositif de mesure (20) ont lieu sans contact.

4. Procédé selon la revendication 3, selon lequel on utilise pour la mesure du repère de référence (9, 9a,..., 9i) et la mesure de l'objet de mesure (6) de la pièce (1) un procédé à interférométrie laser.

5. Dispositif pour mesurer des pièces (1) comportant
• un manipulateur (10),
• un dispositif de mesure (20) qui est disposé sur le manipulateur (10) de manière à permettre le déplacement du dispositif de mesure (20) dans l'espace à l'aide dudit manipulateur (10),
• plusieurs repères de référence (9, 9a,..., 9i) qui sont disposés de manière excentrée en différents points dans le voisinage d'une pièce à mesurer (1) et sont associés chacun à au moins un objet de mesure (6) sur la pièce à mesurer (1) situé à une faible distance du repère de référence (9, 9a,...,9i),
• et un dispositif de commande (30) agencé de manière telle, que le dispositif de mesure (20), avant une mesure d'un objet de mesure (6), soit d'abord amené par le manipulateur (10) dans une position d'étalonnage dans laquelle une mesure du repère de référence (9, 9a,...9i) associé à l'objet de mesure (6) est réalisée aux fins d'étalonner un système de coordonnées du manipulateur (10),
• puis le dispositif de mesure (20) est amené à l'aide du manipulateur (10) dans une position de mesure dans laquelle la mesure de l'objet de mesure (6) concerné est effectuée,
le dispositif de mesure (20) pour la mesure du repère de référence (9, 9a,...,9i) et la mesure de l'objet de mesure (6) de la pièce, le manipulateur (10) étant stationnaire, étant monté avec possibilité de déplacement linéaire le long d'un axe (21) du dispositif de mesure et/ou de pivotement autour d'un axe (40) du dispositif de mesure et la position de l'axe (21, 40) du dispositif de mesure, pour l'étalonnage, étant déterminée dans un système de coordonnées fixe par rapport au repère de référence (9, 9a,..., 9i).

6. Dispositif selon la revendication 5, comportant un support de pièce (7) avec des moyens pour tenir la pièce (1) dans une position définie sur le support de pièce (7) ainsi que plusieurs repères de référence (9, 9a,...9i) qui sont disposés sur le support de pièce (7) en différents points définis dans le voisinage d'une pièce (1) positionnée.

7. Dispositif selon la revendication 5 ou 6, dans lequel le dispositif de mesure (20) comprend un dispositif de mesure (20) qui travaille sans contacts.

8. Dispositif selon une des revendications 5 à 7, dans lequel les repères de référence (9, 9a,...,9i) matérialisent des points de référence géométriques stationnaires dont la position dans l'espace est mémorisée dans une unité de calcul (31).

9. Dispositif selon une des revendications 5 à 8, dans lequel les repères de référence (9, 9a,...,9i) comprennent chaque fois un corps géométrique (9, 9a,..., 9i).

10. Dispositif selon une des revendications 5 à 9, dans lequel le dispositif de mesure (20) comprend un dispositif de mesure de contour (26) avec une source de signal (27, 28, 29) pour générer une surface de palpage optique (35) et une unité d'enregistrement (32) reproduisant une portion (37) de la surface de palpage (35) avec une zone de mesure (36).

11. Dispositif selon la revendication 10, dans lequel la source de signal (27, 28, 29) comprend une source de rayon laser (27).
